# EUROPÄISCHE PATENTSCHRIFT

(11) **EP 3 570 711 B1**
(45) Veröffentlichungstag und Bekanntmachung des Hinweises auf die Patenterteilung: **27.09.2023**
(21) Anmeldenummer: 17822197.4
(22) Anmeldetag: 11.12.2017
(51) Int. Cl.: A47J 27/08, A47J 27/09

(54) **SCHNELLKOCHTOPF**
PRESSURE COOKER
AUTOCUISEUR

(30) Priorität: 20.01.2017 DE 102017200906
(43) Veröffentlichungstag der Anmeldung: 27.11.2019
(73) Patentinhaber: WMF GmbH, 73312 Geislingen/Steige (DE)
(72) Erfinder: MORMONE, Maria, 73329 Kuchen (DE); REINHARD, Dieter, 73326 Deggingen (DE)
(74) Vertreter: Pfenning, Meinig & Partner mbB
(86) Internationale Anmeldenummer: PCT/EP2017/082130
(87) Internationale Veröffentlichungsnummer: WO 2018/133993

(56) Entgegenhaltungen:
- EP-A1- 1 568 301
- EP-A1- 2 258 243
- CN-B- 103 315 620
- CN-U- 201 658 236
- CN-U- 201 861 418
- DE-A1-102008 062 980

## Beschreibung

Die vorliegende Erfindung bezieht sich auf einen Schnellkochtopf gemäß Anspruch 1. Solche Schnellkochtöpfe (erfindungsgemäß ist hier ganz allgemein ein Dampfdruckkochgefäß gemeint) sind beispielsweise aus der DE 43 15 245 A1 oder aus der DE 10 2009 013 240 A1 bekannt.

Die CN 103 315 620 B offenbart einen Schnellkochtopf mit einer Sicherheitsvorrichtung zum Öffnen und Schließen des Deckels, wobei die Sicherheitsvorrichtung einen oberen Griff, einen Ventilsitz und einen unteren Griff, der an einem Herdkörper befestigt ist, umfasst.

Ausgehend vom Stand der Technik ist es die Aufgabe, einen verbesserten Schnellkochtopf (Dampfdruckkochgefäß) zur Verfügung zu stellen, der auf konstruktiv möglichst einfache Art und Weise sämtliche für Schnellkochtöpfe vorgeschriebene Sicherungsmaßnahmen erfüllt und zudem möglichst leicht eine Reinigung verschiedenster Komponenten bzw. Bauelemente des Schnell kochtopfes ermöglicht.

Diese Aufgabe wird gemäß des kennzeichnenden Teils aus Anspruch 1 gelöst; vorteilhafte Weiterbildungsformen lassen sich jeweils den abhängigen Ansprüchen entnehmen.

Die vorliegende Erfindung setzt an der Idee an, einen Druckaufbau (bei falschem Aufsetzen des Deckels auf den Topf bzw. das Kochgefäß) dadurch zu verhindern, dass eine Deckeldichtung (nachfolgend als Dichtelement bezeichnet) auf geeignete Art und Weise mittels eines Elementes mechanisch so weggedrückt wird, dass beim falschen Aufsetzen des Deckels ein Druckaufbau im Topfinneren verhindert wird.

Ein erfindungsgemäßer Schnellkochtopf ist in Anspruch 1 beschrieben.

Bevorzugt ist dabei, dass die Kopplungsvorrichtung sowohl zum Aneinanderkoppeln, als auch zum Entkoppeln ausgebildet ist.

Der Deckelgriff und der Gefäßgriff können relativ zueinander um die Schnellkochtopfmittenachse (die nachfolgend abgekürzt auch als Topfmittenachse bezeichnet wird) verdrehbar oder verschwenkbar sein. In der Regel entspricht (bei korrekt verschlossenem Schnellkochtopf) dabei die Topfmittenachse der Kochgefäßmittenachse und der Deckelmittenachse: Diese Achsen können als Rotationssymmetrieachsen des in der Regel (näherungsweise, d. h. unter anderem bis auf seinen Griff gesehen) rotationssymmetrischen Deckels und des in der Regel (näherungsweise, d. h. unter anderem bis auf seinen Griff gesehen) rotationssymmetrischen Kochgefäßes angesehen werden. Die vorangehend genannten Achsen fallen in der Regel zusammen, so dass nachfolgend, wenn von einer "Achse" die Rede ist, immer diese Symmetrieachse bzw. die Topf-, Gefäß- oder Deckelmittenachse gemeint ist, wenn nichts Anderes gesagt ist.

Wenn die beiden Griffe (Deckelgriff und Gefäßgriff) übereinanderstehen und mittels des/ihres Verschlussmechanismus korrekt verschlossen wurden, ist die Fluiddichtigkeit bzw. Druckdichtigkeit des Schnellkochtopfs hergestellt, besagter Topf also fluiddicht bzw. druckdicht verschlossen. In der Regel meint ein Übereinanderstehen der beiden Griffe ein fluchtendes Übereinanderstehen, also in Aufsicht (entlang der Achse gesehen) ein im Wesentlichen deckungsgleiches Übereinanderstehen der beiden in Bezug auf den eigentlichen Deckelkörper bzw. den eigentlichen Kochgefäßkörper auskragenden Griffe. Werden die beiden Griffe aus ihrer fluchtenden bzw. übereinanderstehenden Position heraus verschwenkt oder verdreht (also aus dieser Position gegeneinander um die Achse verdreht oder verschwenkt), so wird der Topf geöffnet und das Kochgut im Topfinneren wird zugänglich.

Der Verschlussmechanismus ist bzw. umfasst bevorzugt ein(en) mechanischer/n Verschluss. Bei diesem erfolgt das (korrekte) druckdichte Verschlie-ßen des Topfes vorzugsweise durch Übereinanderstellen des Deckelgriffs und des Topfgriffs wie folgt. Der Deckel einerseits und das Kochgefäß andererseits werden (ausgehend von einer noch nicht übereinander gestellter Position beider Griffe) entlang der Achse ineinander gesteckt bzw. ineinander geschoben. Danach kann der Deckel relativ zum Kochgefäß (oder umgekehrt; entscheidend ist das entgegengesetzte Drehen bzw. Verschwenken vom Deckel und vom Kochgefäß relativ zueinander) um die Achse und in Verschlussrichtung so gedreht werden, dass die beiden Griffe in die übereinander gestellte Position überführt werden.

Durch Drehen in umgekehrter Richtung (also entgegen der vorbeschriebenen Verschlussrichtung), also durch Überführen der beiden Griffe in eine nicht übereinander gestellte Position, können der Deckel und das Kochgefäß durch Auseinanderziehen entlang der Achse auch wieder voneinander getrennt werden (Öffnen des Schnellkochtopfes).

Der Verschlussmechanismus kann insbesondere ein Bajonettverschluss sein (bzw. einen solchen umfassen). Dabei kann die Druckdichtigkeit über ein Dichtelement (beispielsweise einen umlaufenden Dichtring) des Verschlussmechanismus hergestellt werden. Der Verschlussmechanismus kann also eine Steck-Dreh-Verbindung, beispielsweise als Bajonettverschluss ausgebildet, und einen Dichtring umfassen.

Bevorzugt weist der Deckelgriff die Kopplungsgruppe auf und der Gefäßgriff weist die Kopplungsvorrichtung auf. Aufweisen kann hier insbesondere Integrieren bedeuten. Die Rollen können aber auch vertauscht sein (der Deckelgriff weist dann die Kopplungsvorrichtung auf und der Gefäßgriff die Kopplungsgruppe).

Erfindungsgemäß bevorzugt ist die erste beschriebene Variante, also dass beim Übereinanderstellen der beiden Griffe die beiden Kopplungselemente der Kopplungsgruppe mittels der Kopplungsvorrichtung mechanisch voneinander entkoppelt werden. Dies kann beispielsweise (siehe nachfolgend) über eine sich gabelnde Steuerkurve mit einem mechanischen Trennelement (insbesondere: Keil) zwischen den beiden Gabelungen bzw. Steuerkurvenästen bewirkt werden.

Vorteilhafterweise realisierbare Merkmale lassen sich Anspruch 2 entnehmen.

Bevorzugt sind also die Entkoppelbewegung und die Koppelbewegung (von den beiden Kopplungselementen relativ zueinander) lineare Bewegungen bzw. Translationsbewegungen entlang besagter Geraden.

Weitere vorteilhafterweise realisierbare Merkmale lassen sich Anspruch 3 entnehmen. (Gemäß der Anspruchsstruktur gilt für alle abhängigen Ansprüche, dass die Merkmale derselben in beliebigen Kombinationen miteinander verwirklicht werden können. In den nachfolgenden Ausführungsbeispielen sind somit nur besonders vorteilhafte Merkmalskombinationen beschrieben; einzelne Merkmale aus abhängigen Ansprüchen können insbesondere auch weggelassen werden.)

Weitere vorteilhafterweise realisierbare Merkmale lassen sich Anspruch 4 entnehmen.

Die Druckfeder kann zwischen eines der Gehäuseelemente und eines der Kopplungselemente (bevorzugt: das erste Kopplungselement, vergleiche nachfolgend) gespannt werden. Sie kann aber auch mit einem ihrer Federenden an einem der Kopplungselemente (bevorzugt: am ersten Kopplungselement) und/oder mit einem ihrer Federenden (im "und"-Fall: mit ihrem anderen Federende) an einem der Gehäuseelemente fixiert sein. Die Feder kann sich innerhalb des/der Gehäuseelements/e an dem bzw. an einem der Gehäuseelement(e) einerseits und an einem der Kopplungselemente (bevorzugt: am ersten Kopplungselement) andererseits abstützen. Bevorzugt erfolgt das Abstützen an Wandabschnitten eines der Gehäuseelemente einerseits und eines der Kopplungselemente andererseits. Durch all das Vorbeschriebene kann die vorgespannte Lagerung bewirkt werden.

Gemäß der Ansprüche 1 bis 4 können also die beiden Kopplungselemente beim Entkoppeln linear (also in Form einer Translationsbewegung bzw. entlang einer/der Geraden) auseinander wandern und, beim wieder Aneinanderkoppeln wieder zusammen wandern. Dies geschieht dadurch, dass sie durch die Kopplungsvorrichtung mechanisch voneinander entkoppelt bzw. wieder aneinander gekoppelt werden.

Weitere vorteilhafterweise realisierbare Merkmale lassen sich Anspruch 5 entnehmen.

Bewirkt das Entkoppeln besagtes Anlegen des Dichtelements, so wird nachfolgend noch näher beschriebenes erstes Ausführungsbeispiel realisiert. Bewirkt dagegen das Aneinanderkoppeln der beiden Kopplungselemente ein solches Anlegen des Dichtelements, so wird eine erfindungsgemäß Variante (nachfolgend auch als zweites Ausführungsbeispiel näher beschrieben) realisiert.

In der Regel ist also das Dichtelement vor dem Übereinanderstellen der beiden Griffe zumindest abschnittsweise beabstandet zum Deckel positioniert. Insbesondere kann das Dichtelement zumindest abschnittsweise beabstandet von der Innenseite des Randes des Deckels sein. Beim Anlegen (dies ist in der Regel als In-Berührung-Bringen zu verstehen) des Dichtelements an den Deckel wird dieser Abstand zumindest verringert, in der Regel auf Null reduziert (also beseitigt). Hierdurch kommt es zu besagtem fluiddichten Verschluss zwischen dem Deckel einerseits und dem Kochgefäß andererseits. Das Dichtelement ist bevorzugt ein entlang des Deckelrands (sowie bevorzugt innenseitig bzw. innenliegend desselben) und/oder bevorzugt ein vollständig umlaufender Dichtring. Bevorzugt ist dabei die "und"-Variante des vorangehenden Satzes.

Weitere vorteilhafterweise realisierbare Merkmale lassen sich den Ansprüchen 6 bis 8 entnehmen.

Sind Merkmale dieser Ansprüche realisiert, so kann der Überstand (also das Hinausstehen) bevorzugt entlang der erwähnten Geraden bzw. linearen Bewegungsrichtung, entlang derer die beiden Kopplungselemente vermittels der Kopplungsvorrichtung relativ zueinander gesehen bewegbar sind, ausgebildet bzw. ausgerichtet werden. Der Überstand bzw. das Hinausstehen stellt also eine Überkragung dar.

Der Abstandshalter und das Widerlager sind bevorzugt aneinander befestigt, besonders bevorzugt bilden beide zusammen einstückig eines der Kopplungselemente bzw. das erste Kopplungselement aus. Letzteres besteht also bevorzugt ausschließlich aus diesen beiden Bauteilen Abstandshalter und Widerlager und weist keine weiteren Bauteile auf. Der Abstandshalter und das Widerlager sind bevorzugt entlang der bereits erwähnten Geraden gesehen beabstandet voneinander positioniert.

Das mechanische Abstützen bedeutet in der Regel ein (mechanisches) Berühren, also ein unmittelbares Aneinanderstoßen des Kopplungselementes mit dem Widerlager (bzw. des Widerlagers) und des anderen Kopplungselementes (bzw. dessen Gegenlager).

Wenn das Widerlager am Gegenlager (bzw. am Kopplungselement, das dieses Gegenlager umfasst) anliegt, wenn also der aneinander gekoppelte Zustand vorliegt, greift somit in der Regel der Abstandshalter relativ zum Kopplungselement mit dem Gegenlager gesehen über letzteres Kopplungselement maximal hinaus. (Der Abstandshalter liegt, ausgehend vom Widerlager und entlang der bereits erwähnten Geraden, also entlang der linearen Bewegungsrichtung gesehen, auf der dem Gegenlager bzw. auf der demjenigen Kopplungselement, das dieses Gegenlager umfasst, gegenüberliegenden Seite.) Wenn die beiden Kopplungselemente sich im entkoppelten Zustand befinden ist in der Regel das Widerlager, entlang der linearen Bewegungsrichtung gesehen, maximal beabstandet von seinem Gegenlager (bzw. von demjenigen Kopplungselement, bevorzugt dem zweiten Kopplungselement, das dieses Gegenlager umfasst). Auf der dem Widerlager gegenüberliegenden Seite des Gegenlagers (bzw. dessen Kopplungselements) ist dabei, wiederum entlang der linearen Bewegungsrichtung gesehen, der Abstandshalter relativ zum Gegenlager bzw. zu dessen Kopplungselement maximal zurückgezogen (diese Position entspricht der dem Gegenlager nächstliegenden Position des Abstandshalters bzw. dessen dem Gegenlager abgewandten äußeren Ende, gesehen in Richtung besagter Geraden bzw. Translationsbewegungsrichtung).

Weitere vorteilhafterweise realisierbare Merkmale lassen sich Anspruch 9 entnehmen.

Erfindungsgemäße Merkmale beschreibt Anspruch 1.

Dabei kann das Trennelement ein sich zu einer Seite hin (nämlich in der Dreh- bzw. Schwenkrichtung zum Öffnen des Deckels hin) verjüngendes Wandelement, insbesondere ein Keil, sein. Die beiden Steuerkurvenäste können Führungsvertiefungen (beispielsweise Kerben, Nuten oder dergleichen) sein, die beidseits des Trennelements (also von diesem voneinander getrennt) verlaufen. In Richtung zur Verjüngung hin können die beiden Steuerkurvenäste sich (nachdem, in diese Richtung gesehen, das Trennelement endet) zu einer einzigen Führungsvertiefung vereinigen. Diese Führungsvertiefung stellt dann einen gemeinsamen Steuerkurvenabschnitt für die beiden Kopplungselemente dar.

In diesem gemeinsamen Steuerkurvenabschnitt können die beiden Kopplungselemente im aneinandergekoppelten Zustand (also wenn die beiden Griffe ausreichend weit gegeneinander verdreht bzw. verschwenkt sind) gemeinsam bewegt werden. Anders ausgedrückt: Im geöffneten Zustand des Deckels und des Kochgefäßes, also wenn die beiden Griffe noch nicht übereinanderstehen, sondern in Dreh- bzw. Schwenkrichtung noch ausreichend von einander beabstandet sind, laufen die beiden Kopplungselemente zunächst gemeinsam in den gemeinsamen Steuerkurvenabschnitt der Steuerkurve hinein und anschließend gemeinsam darin, bevor sich dieser gemeinsame Abschnitt (in Verschlussrichtung von Deckel und Kochgefäß gesehen) durch das Trennelement in die beiden Steuerkurvenäste aufspaltet bzw. aufgabelt. In diesen beiden Ästen erhalten die beiden Kopplungselemente (dies bewirkt durch das sich in Verschlussrichtung gesehen verbreiternde Trennelement) einen umso größeren Abstand - in radiale Richtung nach außen bzw. entlang der Translationsbewegungsrichtung der beiden Kopplungselemente gesehen - voneinander, je näher Deckel einerseits und Kochgefäß andererseits sich ihrem fluiddicht verschlossenen Zustand nähern bzw. je näher Deckelgriff einerseits und Topfgriff andererseits sich ihrer übereinander gestellten Position kommen.

Vorzugsweise sind einerseits das Trennelement, der gemeinsame Steuerkurvenabschnitt und die beiden getrennten Steuerkurvenäste im Gefäßgriff ausgebildet, wohingegen andererseits die beiden Kopplungselemente im Deckelgriff ausgebildet sind. Dabei können (in Richtung der Tropfmittenachse gesehen) die beiden Kopplungselemente über die dem Gefäßgriff zugewandte Unterseite des Deckelgriffs überkragen und bis hinein in die in die (dem Deckelgriff zugewandte) Oberseite des Gefäßgriffs eingebrachten Führungskurven (gemeinsamer Steuerkurvenabschnitt sowie beide getrennte Steuerkurvenäste) hineinreichen.

In der erfindungsgemäßen Variante (vgl. auch das nachfolgende zweite Ausführungsbeispiel) weist die Kopplungsvorrichtung zwei aufeinander zulaufende Seitenwände und eine zwischen diesen liegende, sich durch das Aufeinanderzulaufen verjüngende einzelne Steuerkurve auf. Diese Steuerkurve ist also zunächst breiter, bevor sie sich durch besagtes Aufeinanderzulaufen der Seitenwände als Führungsvertiefung zunehmend verjüngt. Diese gemeinsame Führungsvertiefung ist in einem der Griffe (bevorzugt: im Gefäßgriff) ausgebildet. Im dazu komplementären Griff (bevorzugt: im Deckelgriff) sind wiederum die beiden Kopplungselemente relativ zueinander beweglich (vorzugsweise wie im ersten Ausführungsbeispiel, siehe nachfolgend, entlang einer Geraden beweglich) positioniert.

In dieser Variante (zweites Ausführungsbeispiel) werden also beim Übereinanderstellen der beiden Griffe die beiden Kopplungselemente der Kopplungsgruppe mittels der Kopplungsvorrichtung mechanisch aneinander gekoppelt, indem beim Zusammenschwenken der beiden Griffe in die Verschlussposition von Deckel und Kochgefäß bzw. in ihre übereinandergestellte Position die beiden Seitenwände die beiden Kopplungselemente zusammendrücken. Dabei kann es, ganz analog wie beim ersten Ausführungsbeispiel, dadurch zu einem Zurückziehen eines Abstandshalters eines der beiden Kopplungselemente (bevorzugt: erstes Kopplungselement) so kommen, dass sich ein Dichtelement an den Deckel anlegt. Das mechanische Aneinanderkoppeln der beiden Kopplungselemente mittels der Kopplungsvorrichtung kann analog zum ersten Ausführungsbeispiel mit einer vorgespannten Druckfeder (die ansonsten, also im entkoppelten Zustand, die beiden Kopplungselemente voneinander auf Abstand hält, z. B. vermittels zweier Gehäuseelemente ganz analog wie beim ersten Ausführungsbeispiel) geschehen.

Weitere vorteilhafterweise realisierbare Merkmale lassen sich Anspruch 10 entnehmen.

Ebenso lassen sich Anspruch 11 vorteilhafterweise realisierbare Merkmale entnehmen.

Gemäß dieses Anspruchs kann das zweite Kopplungselement (relativ zur Topfmittenachse gesehen) zurückziehbar sein, also in anderen Worten gesagt, von der Topfmittenachse aus gesehen in Richtung der Deckel- bzw. Topfaußenseite hin schiebbar sein (also radial nach außen schiebbar sein).

Bei diesem Zurückziehen bzw. Nach-Außen-Schieben wird das erste Kopplungselement bevorzugt dadurch mitgenommen, dass das/ein Gegenlager des zweiten Kopplungselements an das/ein Widerlager des ersten Kopplungselements mechanisch koppelt. Beispielsweise kann dies durch einen mechanischen Anschlag vom Gegenlager am Widerlager (während das zweite Kopplungselement radial nach außen bewegt wird) geschehen, wodurch es nach erfolgter Kopplung des Gegenlagers und des Widerlagers dazu kommt, dass das Widerlager (und somit das erste Kopplungselement) nach außen mitgeschoben wird.

Hat (vgl. vorangehend) der Deckelgriff das mindestens eine Gehäuseelement bzw. die beiden Gehäuseelemente (vermittels dessen/derer die beiden Kopplungselemente gegeneinander mechanisch verspannt gelagert werden können), so entspricht das von der Topfmittenachse Wegbewegen nach außen in der Regel einer Bewegung relativ zu diesem/n Gehäuseelement(en) nach au-ßen.

Erfindungsgemäß kann somit ein länglicher Bolzen an ein zweites Kopplungselement (Verriegelungseinheit) gekoppelt werden und es kann eine damit verbundene Bewegungssteuerung über eine sich gabelnde Steuerkurve z. B. im Topfgriff realisiert werden. Besagte Verriegelungseinheit und der Topfgriff erhalten dadurch eine Doppelfunktion. Einmal die Funktion, den Deckelgriff auf dem Deckel im Betrieb zu verriegeln und zusätzlich durch ein Zurückziehen des Bolzens den Dichtring in seine Dichtlage zu bringen. Im Umkehrfall (also beim Öffnen des Topfes) geht beim Herausschwenken des Deckelgriffs aus dem Topfgriff - durch Entlasten des Bolzens über die Steuerkurve am Topfgriff - der Bolzen wieder in seine Ausgangslage. Dies kann mittels einer Druckfeder realisiert werden. Dabei drückt der Bolzen den Dichtungsring wieder von seiner Dichtfläche weg, so dass sich kein Druck mehr aufbauen kann.

Über eine Kopplung der Verriegelung wird beim Aufsetzen und Abnehmen des Griffes auf den bzw. von dem Deckel der Bolzen zurückgezogen, so dass keine Kollision bei diesem Ablauf entsteht und eine sichere Handhabung gegeben ist.

Die vorliegende Erfindung bietet somit eine Alternativlösung zum Stand der Technik, die insbesondere die in der Aufgabenstellung der vorliegenden Erfindung beschriebenen Vorteile verwirklicht. Insbesondere ist das Abnehmen des Deckelgriffs vom Deckel möglich mit Hilfe des (zweiten) Kopplungselements bzw. dessen Gegenlager: hierdurch ist der Abstandshalter bzw. Bolzen zurückziehbar, damit dieser Bolzen aus seiner Bohrung (eingebracht im Deckel) herausgezogen werden kann. Ohne ein derart gestaltetes (zweites) Kopplungselement wäre der Deckelgriff nicht vom Deckel selbst abnehmbar.

Nachfolgend wird die Erfindung anhand zweier Ausführungsbeispiele beschrieben. Dabei zeigen:
Figuren 1 bis 5 das erste Ausführungsbeispiel und
Figur 6 das zweite Ausführungsbeispiel
(wobei besagtes zweites Ausführungsbeispiel bzw. die zweite Variante bis auf die zu Figur 6 beschriebenen Unterschiede ganz analog zum ersten Ausführungsbeispiel ausgebildet ist).

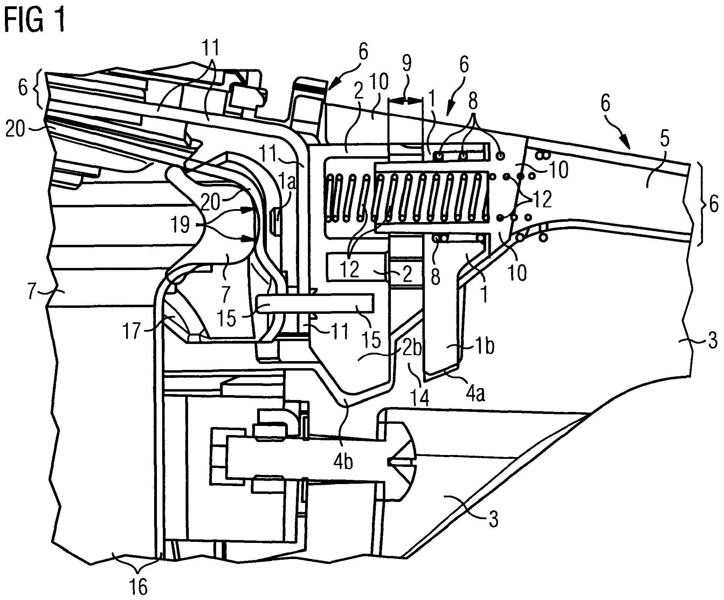

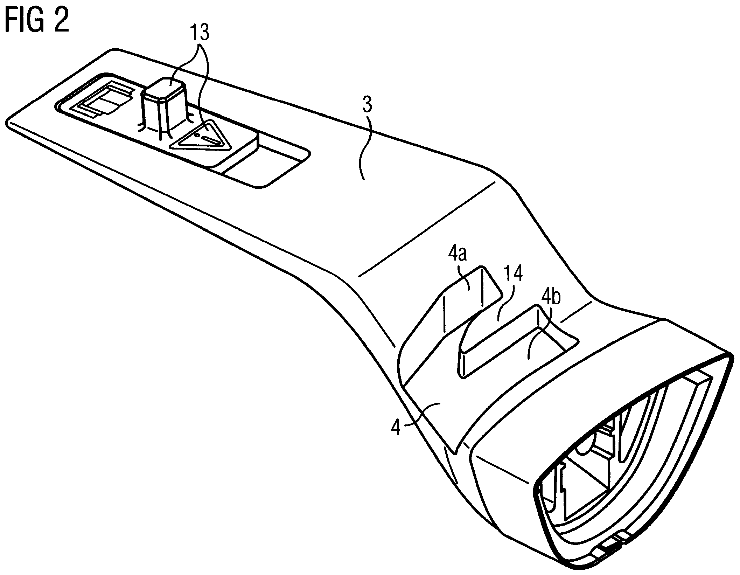

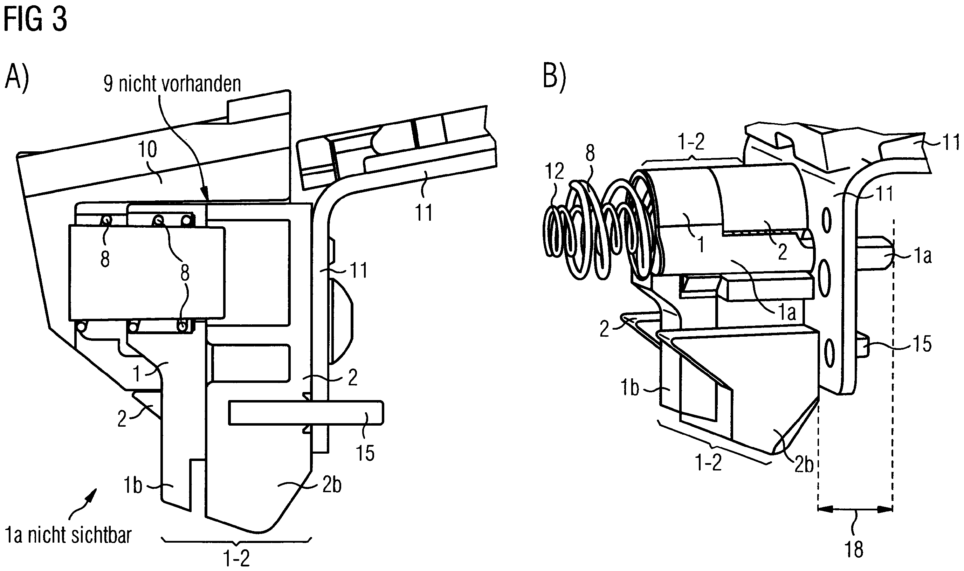

Figur 1 zeigt einen Ausschnitt aus einer Schnittansicht, die eine Ebene parallel zur Topflängs- bzw. Topfsymmetrieachse (die gleichzeitig die Deckel- und Kochgefäßsymmetrieachse ist) eines Schnellkochtopfs darstellt. Figuren 2 bis 5 zeigen dreidimensionale Aufsichten (Figuren 2, 3B, 4 und 5) bzw. eine weitere Schnittansicht (Figur 3A) auf bzw. von einzelnen Bauelementen des in Figur 1 gezeigten Schnellkochtopfes.

Die Innenseite des Deckels 6 (die im geschlossenen Zustand des Topfes dem Kochgut zugewandt ist) ist durch ein Formteil (innenseitiges Formteil 20) ausgebildet und wie der Deckel 6 selbst lediglich ausschnittsweise dargestellt. Vom eigentlichen, näherungsweise rotationssymmetrischen und näherungsweise flachzylindrisch ausgeformten Deckel 6 erstreckt sich, von der Deckel- bzw. Topfsymmetrieachse (nicht sichtbar) radial auskragend, also radial nach außen gerichtet, der Deckelgriff 5. Dieser ist, wie nachfolgend noch beschrieben, abnehmbar am Formteil 20 befestigt. Nachfolgend werden wahlweise die Elemente 5 und 20 zusammen als Deckel 6 bezeichnet oder nur das eigentliche Formteil 20 ohne den Griff 5, wobei der Fachmann jeweils weiß bzw. aus dem Zusammenhang erkennt, was gemeint ist.

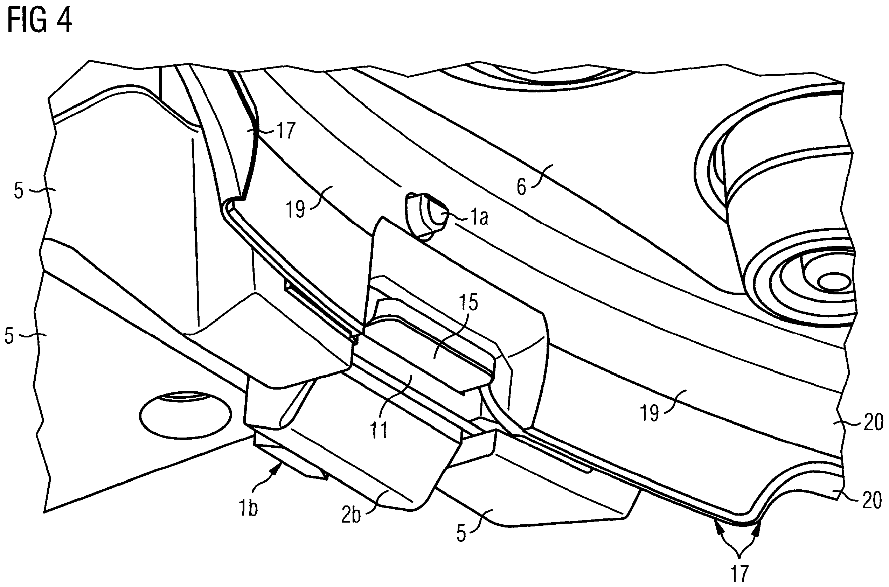

Das innenseitige Formteil 20 des Deckels 6 ist an seinem dem Kochgefäß 16 zugewandten, unteren Ende als Teil eines Verschlussmechanismus 7 (Dichtung), 17 (Bajonettverschlussabschnitt) ausgeformt, wobei der Teil 17 des Verschlussmechanismus (vgl. auch Figur 4) die deckelseitigen Abschnitte eines Bajonettverschlusses ausbildet. Der obere Rand des (näherungsweise zylinderförmigen und) zum Deckel komplementären Kochgefäßes 16 bildet die dazu komplementären Teile des Bajonettverschlusses aus, so dass der Deckel 6 mit dem daran lösbar bzw. abnehmbar befestigten Deckelgriff 5 mittels des Bajonettverschlusses des Verschlussmechanismus flüssigkeitsdicht, dampfdicht (also fluiddicht) und druckdicht mit dem Kochgefäß 16 verbunden werden kann (verschlossener Zustand des Schnellkochtopfes, siehe auch nachfolgende Beschreibung). Zu besagtem Verschlussmechanismus 7, 17 gehört weiterhin der innenseitig am äußeren Rand des Deckels 6, also innenseitig am Formteil 20 anliegend umlaufende Dichtring 7. Im druckdicht verschlossenen Zustand (Verschlussmechanismus bzw. Bajonettverschluss desselben verschlossen bei übereinander liegenden Griffen 3, 5; vgl. nachfolgend) liegt die Außenseite des Dichtringes 7 somit über den gesamten Deckelumfang an der zum Deckelzentrum hin weisenden Innenseite 19 des innenseitigen Formteils 20 an und dichtet somit das Topfinnere druckdicht vom Außenraum ab.

Komplementär zum Deckelgriff 5 des Deckels 6 ist am Kochgefäß 16 ein Gefäßgriff 3 befestigt (vgl. auch Figur 2). Beim korrekten, druckdichten Verschließen des Topfs werden die beiden Griffe 5 und 3 (entlang der hier nicht gezeigten Topfmitten- bzw. Topfsymmetrieachse gesehen) fluchtend übereinander gestellt, nachdem der Deckel 6 und das Kochgefäß 16 bzw. deren jeweilige Bajonettverschlussteile zuvor bei gegeneinander verdrehten Griffen 5 und 3 entlang der Topfmittenachse zusammengesteckt wurden. Wie nachfolgend beschrieben, kommt es dabei erfindungsgemäß beim Überführen der beiden Griffe 5, 3 in ihre übereinander gestellte Position durch Drehen dieser beiden Griffe gegeneinander zum Zurückziehen des Bolzens 1a, wodurch der zuvor abschnittsweise, nämlich auf Höhe besagten Bolzens 1a und wegen ebendiesem, von der Innenseite 19 des Formteils 20 abstehende Dichtring 7 entlang des gesamten Innenumfangs des Deckels 6 an besagte Innenseite 19 angelegt wird. Dadurch werden Deckel 6 und Kochgefäß 16 beim Schließen des Bajonettverschlusses bzw. des Verschlussmechanismus fluiddicht miteinander verschlossen.

Beim Übereinanderstellen der beiden Griffe 5 und 3 zum druck- und fluiddichten Verschließen des Schnelltopfkoches erfolgt ein Zurückziehen des Bolzens 1a zum Anlegen des Dichtelements 7 an die Innenseite 19 des Formteils 20 vermittels eines ersten 1 und eines zweiten 2 Kopplungselementes, die zusammen eine Kopplungsgruppe 1-2 ausbilden. Diese beiden Kopplungselemente 1, 2 werden mechanisch voneinander entkoppelt, also auf einen Abstand 9 voneinander gebracht, wodurch es zu besagtem Zurückziehen des Bolzens 1a kommt. Ebenso erfolgt das Wiederöffnen des Topfes beim Gegeneinanderverdrehen der beiden Griffe 3, 5 (also beim Entfernen der beiden Griffe 5, 3 aus ihrer übereinander gestellten Position) vermittels dieser beiden Kopplungselemente 1, 2: Wird der Griff 5 relativ zum Griff 3 um die Topfmittenachse verdreht, so werden die beiden Elemente 1, 2 erneut mechanisch aneinander gekoppelt (der Abstand 9 wird also Null). Hierdurch kommt es zu einem Vorschieben des Bolzens 1a in Richtung zur Topfmittenachse hin: Der Bolzen 1a wird durch eine an ihn angepasst ausgeformte und positionierte Bohrung (im Schnitt von Figur 1 nicht sichtbar) im Formteil 20 durch dieses hindurch geschoben, wodurch es zu einem Wegdrücken eines Abschnitts des Dichtrings 7 von der Innenseite 19 des Formteils 20 (also zur Mittenachse hin) kommt. Zwischen dieser Innenseite 19 bzw. dem Formteil 20 einerseits und dem Dichtring 7 andererseits entsteht so ein Luftspalt, die Fluiddichtigkeit des Verschlusses zwischen Deckel 6 und Kochgefäß 16 wird somit aufgehoben und der Deckel 6 kann vom Kochgefäß 16 abgenommen werden.

Um besagte Funktionsweise zu realisieren, weist der Deckel 6 bzw. dessen Griff 5 zwei Gehäuseelemente 10, 11 auf, die zusammen ein starres, die beiden Kopplungselemente 1, 2 partiell (nämlich - radial von der Topfmittenachse nach außen gesehen - auf beiden Seiten sowie nach oben, nicht jedoch nach unten) umschließendes, im Deckelgriff 5 ausgebildetes Gehäuse ausformen. Das innenseitigen Gehäuseelement 11 ist dabei, von der Topfdeckelmittenachse radial nach außen gesehen, also in Ausrichtungsrichtung des Griffs 5 gesehen, zwischen dem Formteil 20 einerseits und dem zweiten Kopplungselement 2 (hier als Schieberelement ausgebildet) positioniert, dient als Gegenlager bzw. Abstützung des Schieberelements 2 und ist im Bereich der Auflage dieses Schieberelements 2 als im Wesentlichen ebenes Formteil ausgebildet.

Am Gehäuseelement 11 ist ein weiteres, außenseitig positioniertes Gehäuseelement 10 fixiert (z. B. festgeschraubt), das sich oberhalb der beiden Kopplungselement 1, 2 zunächst radial nach außen erstreckt, bevor es in Richtung zum außenseitigen Deckelgriffende jenseits der beiden Kopplungselement 1, 2 nach unten abknickt und ein Gegenlager bzw. eine Abstützung für das hier als Bolzenelement ausgebildete erste Kopplungselement 1 ausbildet. Radial nach außen gesehen lässt die lichte Innenweite zwischen dem inneren Gehäuseelement 11 einerseits und dem äußeren Gehäuseelement 10 andererseits (vgl. hierzu auch den Abstand 9 in Figur 1) Raum für eine lineare Translationsbewegung der beiden Kopplungselemente 1, 2 relativ zueinander längs des Griffes 5 bzw. radial von der Topfmittenachse gesehen nach außen. Durch diese Translationsbewegung der beiden Elemente 1, 2 relativ zueinander innerhalb der beiden Gehäuseelemente 10, 11 können die beiden Elemente 1, 2 somit vom mechanisch voneinander entkoppelten Zustand (mit Abstand 9), wie er in Figur 1 gezeigt ist, zum mechanisch miteinander gekoppelten Zustand (also ohne jeglichen Abstand 9, vergleiche hier auch hier auch Figuren 3A und 3B) überführt werden und umgekehrt. Dieses Überführen geschieht mit Hilfe der im Gefäßgriff 3 komplementär zur Kopplungsgruppe 1-2 ausgebildeten Kopplungsvorrichtung.

Diese Kopplungsvorrichtung umfasst eine als Vertiefung in die Oberseite des Gefäßgriffs 3 (also in diejenige Seite dieses Griffs 3, die dem Griff 5 bzw. dessen Unterseite zugewandt ist) eingelassene Steuerkurve 4, 4a, 4b. Letztere umfasst vom Rand des Griffs 3 zu dessen Mitte hin gesehen (vgl. Fig. 2) zunächst einen randseitig beginnenden, in Bezug auf die beiden Elemente 1, 2 in aneinander gekoppelter Form gesehen gemeinsamen Steuerkurvenabschnitt 4, der sich zur Griffmitte hin in zwei getrennte Steuerkurvenäste 4a, 4b aufspaltet. Die beiden getrennten Steuerkurvenäste 4a, 4b sind (als in die Oberseite des Griffs 3 eingelassene, quer zur Grifflängsachse gesehen verlaufende Vertiefungen) in Längsrichtung des Griffes 3 gesehen durch ein Trennelement 14 in Form eines Keiles voneinander getrennt. Radial von der Topfdeckelmittenachse gesehen nach außen (also in Grifflängsrichtung gesehen) folgt somit etwa in der Mitte des Griffs 3 in dessen Oberseite zunächst ein Steuerkurvenast 4b, sodann der Keil 14 und schließlich ein weiterer Steuerkurvenast 4a.

Komplementär zur Kopplungsvorrichtung 4, 4a, 4b, 14 sind die unteren Enden 1b, 2b der beweglich in den Gehäuseelementen 10, 11 des oberen Griffes 5 sitzenden Kopplungselemente 1, 2 ausgebildet und positioniert. Das dem Griff 3 zugewandte untere Ende des ersten Kopplungselements 1 kragt als Widerlager 1b ebenso über die Unterseite des Griffs 5 aus, wie das als Gegenlager 2b ausgebildete untere Ende des zweiten Kopplungselementes 2. Die beiden unteren Enden der Elemente 1, 2 bzw. das Widerlager 1b und das Gegenlager 2b sind so ausgeformt und positioniert, dass sie im mechanisch aneinander gekoppelten Zustand der beiden Elemente 1, 2 formschlüssig im gemeinsamen Steuerkurvenabschnitt 4 positioniert werden können und im mechanisch voneinander entkoppelten Zustand (also wenn der Abstand 9 wie in Figur 1 gezeigt vorliegt) formschlüssig getrennt voneinander in den beiden getrennten Steuerkurvenästen 4a, 4b positioniert werden können.

Mit anderen Worten: Sind die beiden Griffe 3, 5 nicht übereinandergestellt, so liegen die beiden Elemente 1, 2 bzw. deren untere Enden 1b, 2b (aufgrund der Druckfeder 8, die zwischen den beiden Elementen 10, 1 für ein gegeneinander Verspannen der beiden Elemente 1, 2 sorgt, vgl. nachfolgend) innerhalb der Gehäuseelemente 10, 11 im Griff 5 in aneinander mechanisch gekoppelter Form vor. Dreht man dann den Griff 5 (nach einem korrekten Einstecken des Deckels 6 einerseits und des Kochgefäßes 16 andererseits längs der Topfmittenachse ineinander) um die Mittenachse zum Gefäßgriff 3 hin, bringt man also die beiden Griffe 3, 5 übereinander, so laufen die beiden Lager 1b, 2b zunächst aneinandergekoppelt aufgrund ihres Hervorragens aus der unteren Seite des Griffs 5 formschlüssig in den gemeinsamen Steuerkurvenabschnitt 4 ein. Dreht man den Griff 5 in besagte Richtung weiter, so treffen die beiden Enden 1b, 2b in zunächst noch aneinander gekoppelter Form auf das spitze Ende des Keils 14, von dem sie (entgegen der Federkraft der Feder 8) beim Weiterdrehen der Griffe 3, 5 mechanisch auseinandergedrückt werden. Das Gegenlager 2b schiebt sich somit getrennt vom Widerlager 1b in den zweiten Steuerkurvenast 4b hinein, das Widerlager 1b in den ersten Steuerkurvenast 4a. Sind schließlich die beiden Griffe 3, 5 fluchtend, also vollständig übereinandergestellt, so liegt die in Figur 1 gezeigte Position der Kopplungsgruppe 1-2 vor: Das erste und das zweite Kopplungselement 1, 2 sind maximal 9 voneinander beabstandet. Es liegt also eine Überkompensation der die beiden Elemente 1, 2 zueinander hin drückenden Kraft der Feder 8 durch die mechanische Trennung vermittels des Keils 14 vor. Das zweite Kopplungselement 2 schlägt (zumindest annähernd) am inneren Gehäuseelement 11 an und das erste Kopplungselement 1 schlägt (zuminest annähernd) am außenliegenden Abschnitt des außenliegenden Gehäuseelements 10 an.

Die beiden Elemente 1, 2 sind wie folgt ineinandergesteckt: Die der Topfmittenachse zugewandt liegende (innenliegende) Seite des Elements 1, also das der Topfmittenachse zugewandte Ende des Elements 1, ist als länglicher Bolzen bzw. Abstandshalter 1a ausgebildet, der über die der Topfmittenachse zugewandt liegende (innenliegende) Seite des Elements 2, also über das der Topfmittenachse zugewandte Ende des Elements 2, hinauskragt und durch eine Bohrung im Gehäuseelement 11 nach innen, also zum Formteil 20 hin bzw. (durch die Bohrung im Formteil 20) zum Dichtring 7 hin geführt ist. In der Übereinanderstellungsposition der Griffe 3, 5 ist (da das Widerlager 1b vollständig in den Steuerkurvenast 4a hineingeführt ist), der Bolzen 1a in einem relativ zum Dichtring 7 maximal zurückgezogenen Zustand: Das (in Radialrichtung von der Topfmittenachse nach außen gesehen) innenseitige Ende des Bolzens 1a ist in dieser Position zwischen dem Formteil 20 einerseits und dem Gehäuseelement 11 andererseits positioniert, also aus der Bohrung im Formteil 20, die ein Durchschieben des Bolzens 1a durch dieses Formteil 20 und somit ein Drücken des Dichtrings 7 zur Topfmittenachse hin ermöglicht, zurückgezogen.

Dreht man (zum Öffnen des Topfes) den Griff 5 relativ zum Griff 3 wieder aus der Übereinanderstellungsposition der beiden Griffe 3, 5 heraus, so werden die beiden Elemente 1, 2 bzw. deren untere Enden 1b, 2b nach Verlassen des Keilabschnitts 14 (in Topfumfangsrichtung gesehen) durch die Kraft der Druckfeder 8 wieder mechanisch aneinandergekoppelt. Da die innenseitige Wandung sowohl des zweiten Steuerkurvenasts 4b als auch des gemeinsamen Steuerkurvenabschnitts 4 näherungsweise konstant beabstandet ist von der Topfmittenachse, verbleibt dabei das Element 2 mit seiner Innenseite in einer am Gehäuseelement 11 anstoßenden Position, während das erste Kopplungselement 1 (bedingt durch die Federkraft der Druckfeder 8 und den nach innen laufenden Übergang des ersten Steuerkurvenasts 4a in den gemeinsamen Steuerkurvenabschnitt 4) zum zweiten Kopplungselement 2 hin wandert (Verringerung des Abstands 9 auf Null bzw. mechanischer Anschlag der beiden Lager 1b und 2b, vgl. dazu auch Figur 3A sowie Figur 3B). Hierdurch wird der Bolzen 1a durch die Bohrung im Formteil 20 zur Topfmittenachse hin geschoben und drückt den Dichtring 7 lokal von der Innenseite 19 des Formteils 20 weg. Ein Luftspalt entsteht, die Druckdichtigkeit wird aufgehoben und der Schnellkochtopf lässt sich somit öffnen.

Die Figuren 3A und 3B zeigen (ohne die restlichen Griffelemente bzw. Topfelemente) diesen Zustand, in dem die beiden Kopplungselemente Bolzenelement 1 und Schieberelement 2 der Kopplungsgruppe 1-2 mechanisch aneinander gekoppelt sind, der Bolzen 1a des Bolzenelements 1 somit zur Topfmittenachse hin maximal hervorsteht. Wie Figur 3 zeigt, stützt sich die Druckfeder 8 an ihrem außenseitigen Ende innen am außenliegenden Abschnitt des Gehäuseelements 10 ab und ist mit ihrem innenliegenden Ende so in den oberen Abschnitt des Bolzenelements 1 eingeschoben (längs der Translationsrichtung bzw. der linearen Bewegungsrichtung der beiden Elemente 1, 2 relativ zueinander innerhalb der beiden Gehäuseelemente 11, 10), dass die Federkraft der Feder 8 das Bolzenelement 1 zum Schieberelement 2 hin drückt: Mechanischer Anschlag des Elements 1 an der radial von der Topfmittenachse nach außen hin gesehen außenliegenden Seite (also an der zur Topfmittenachse abgewandt liegenden Seite) des Elements 2 sowie, ebenfalls durch die Federkraft der Feder 8 bedingt, mechanischer Anschlag der innenliegenden Seite (also der der Topfmittenachse zugewandt liegenden Seite) des Elements 2 an der außenliegenden Fläche (also an der der Topfmittenachse abgewandt liegenden Fläche) des Gehäuseelements 11.

Das in Figur 3B gezeigte maximale Überstehen des Bolzens 1a über die innenliegende (in Richtung zur Topfmittenachse gesehen) Seite des Elements 2, mit Hilfe dessen das Wegdrücken des Dichtrings 7 nach innen bewirkt wird, ist mit dem Bezugszeichen 18 versehen.

Figuren 1 bis 5 zeigen zudem (Bezugszeichen 15), wie beim ersten Ausführungsbeispiel ein Abnehmen des Deckelgriffs 5 vom Formteil 20 des Deckels 6 ermöglicht ist.

Längs der Topfmittenachse sowie von oben nach unten (also zum Griff 3 hin) gesehen, weist das zweite Kopplungselement 2 zwischen seinem oberen Ende (auf Höhe der Feder 8) und seinem untenliegenden Gegenlager 2b eine nach innen (also zur Topfmittenachse gerichtete) Auskragung 15 auf. Diese ist radial nach innen gesehen (bzw. längs der Translationsbewegungsrichtung der beiden Elemente 1, 2 relativ zueinander gesehen) soweit ausgedehnt bzw. kragt über die Innenseite des Gegenlagers 2b soweit über, dass sie (zumindest bei am Gehäuseelement 11 anliegenden Kopplungselement 2, vgl. Fig. 1) - durch eine formschlüssig dazu 15 ausgebildete Öffnung im innenliegenden Gehäuseelement 11 ebenso hindurchgreifend, wie durch eine ebenso formschlüssige dazu 15 im innenseitigen Formteil 20 ausgebildete Öffnung - nach innen sowohl über das Element 11, als auch über das Element 20 hinausragt. Siehe dazu insbesondere Figuren 1 und 4.

Die Auskragung 15 ist am Element 2 fixiert bzw. ein Bestandteil desselben. Das Element 2 (und somit die Auskragung 15) ist mechanisch mit dem Gegenlager 2b verbunden (Figuren 1 und 3). Zieht man das Element 2 am Gegenlager 2b von der Topfmittenachse weg, also radial nach außen (nicht gezeigt), so bewirkt diese mechanische Verbindung ein Zurückziehen des zweiten Kopplungselements 2 (und somit der Auskragung 15) radial nach außen (entgegen der Federkraft der Feder 8 und, vgl. nachfolgend, der Feder 12): Zwischen dem Gehäuseelement 11 und dem Schieberelement 2 entsteht somit ein Spalt (in den Figuren nicht gezeigt), die Auskragung 15 bzw. deren innenliegendes Ende wird hinter das Formteil 20 in den Zwischenraum zwischen letzterem 20 und dem Gehäuseelement 11 zurückgezogen, die außenliegende Seite des Schieberelements 2 koppelt dabei mechanisch an das Bolzenelement 1, schiebt dieses (entgegen der Federkraft der Feder 8) ebenfalls radial nach außen und bewirkt dadurch gleichzeitig ein Zurückziehen des Bolzens 1a in den Zwischenraum zwischen dem Formteil 20 und dem Gehäuseelement 11.

Beide Elemente, 1a wie 15, sind somit in den Zwischenraum zwischen das Formteil 20 und das Gehäuseelement 11 zurückgezogen. Sie 1a, 15 geben somit jeweils die für sie 1a, 15 in das Formteil 20 eingebrachten Öffnungen bzw. Bohrungen frei und ermöglichen somit durch Betätigen des Gegenlagers 2b ein Abnehmen des Deckelgriffs 5 vom Formteil 20 des Deckels 6. (Ein Schieber 13 dient zur Sicherung gegen ein Öffnen des Deckels unter Druck.)

Dies hat den Vorteil, dass das Formteil 20 einerseits und der Deckelgriff 5 (mit seinen Bauteilen 1, 2, 8, 10, 11 und 12) andererseits getrennt voneinander gereinigt werden können. Im Laufe der Betriebsdauer ist es nämlich nicht zu verhindern, dass (geringfügige) Verschmutzungen auch zwischen das Formteil 20 und den Deckelgriff 5 gelangen.

Beim Bauteil 12 innerhalb der Gehäuseelemente 10, 11 des Deckelgriffs 5 handelt es sich ebenfalls um eine Druckfeder, die konzentrisch innerhalb der Druckfeder 8 positioniert ist. Diese Feder 12 hat eine Verriegelungs- und eine Entriegelungsfunktion wie folgt.

Die zur Topfmittenachse hin gewandte Seite des im Wesentlichen vertikal verlaufenden Abschnitts des Gehäuseelements 10 bildet eine gemeinsame Anlagefläche für die beiden Federn 8 und 12 aus. Zwischen den im Wesentlichen vertikal verlaufenden Abschnitten der Gehäuseelemente 10 und 11 ist die Feder 8 zwischen die Elemente 10 und 1 gespannt. Konzentrisch innerhalb der Feder 8 ist die Feder 12 zwischen die Elemente 10 und 2 gespannt. Die Feder 12 vermag das Schieberelement 2 zur Topfmittenachse hin zu drücken (wobei das Schieberelement 2 am Gehäuseelement 11 anschlägt). Die Feder 8 vermag das Bolzenelement 1 zur Topfmittenachse hin zu drücken (wobei das Bolzenelement 1 am Schieberelement 2 anschlägt). Das Vorsehen auch der Feder 12 hat also den folgenden, besonderen Vorteil: Wenn man diese Feder 12 nicht hätte, wären die vorangehend beschriebenen Grundfunktionen des ersten Ausführungsbeispiels zwar gewährleistet, es käme im ganz zurückgezogenen Zustand (also in der am weitesten von der Topfmittenachse entfernten Position) des Bolzenelements 1 aber dazu, dass das Schieberelement 2 zwischen dem Gehäuseelement 11 einerseits und dem Widerlager 1b andererseits (unerwünschterweise) völlig frei, also ohne jegliche Verspannung beweglich wäre.

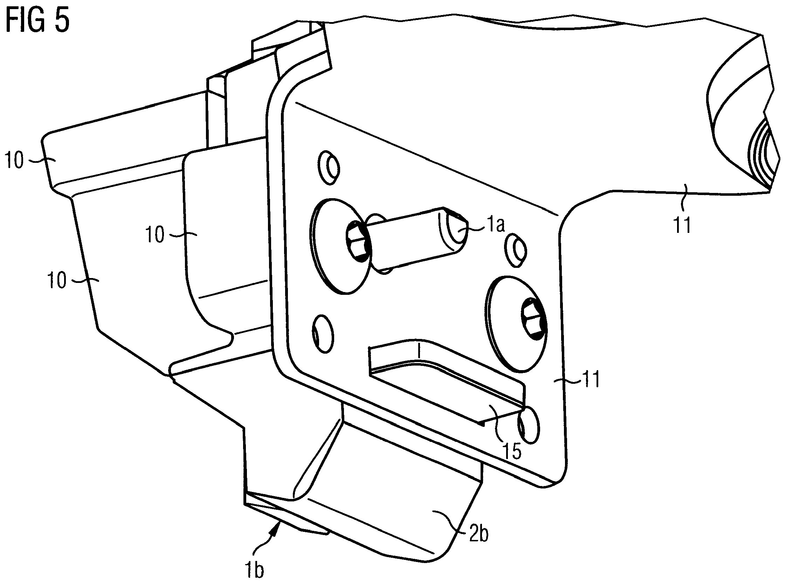

Die Figuren 4 und 5 zeigen weitere Ansichten des ersten Ausführungsbeispiels, die zum Verständnis dessen Aufbau und dessen Funktionsweise vorteilhaft sind.

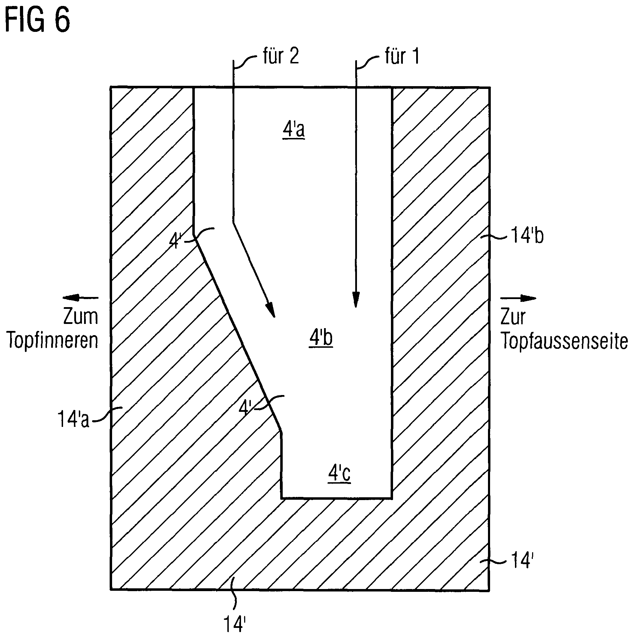

Figur 6 zeigt eine weitere erfindungsgemäße Variante (zweites Ausführungsbeispiel), die ganz analog wie das erste Ausführungsbeispiel bzw. die erste Variante funktioniert, so dass nachfolgend nur die Unterschiede beschrieben werden.

Die Kopplungsvorrichtung umfasst bei dieser zweiten Variante statt einer Steuerkurve, die sich aus einem gemeinsamen Steuerkurvenabschnitt 4 in zwei Äste 4a und 4b verzweigt (Figur 2) hier eine einzige Steuerkurve, die sich nicht verzweigt, sondern die (entlang der Umfangsrichtung des Topfes, also tangential zum Topfrand gesehen) drei verschiedene Abschnitte 4'a, 4'b und 4'c aufweist (es liegt somit genau eine einzige Steuerkurve 4' vor).

Die Kopplungselemente 1, 2 (nicht gezeigt) der Kopplungsgruppe sind nun so ausgebildet, dass sie zum fluiddichten Verschließen des Kochgefäßes mit dem Deckel (in Figur 6 nicht gezeigt) nicht wie im ersten Ausführungsbeispiel mechanisch voneinander entkoppelt werden, sondern mechanisch aneinander gekoppelt werden. Die Kopplungsgruppe ist so ausgebildet, dass die beiden Kopplungselemente 1, 2 vermittels einer Druckfeder (nicht gezeigt, aber ganz analog wie in Figur 1) auf Abstand voneinander gehalten werden (voneinander entkoppelter Zustand), wobei sie 1, 2 mit diesem Abstand beim Verdrehen des Griffes 5 relativ zum Griff 3 in Richtung zur Übereinanderstellungsposition hin im voneinander entkoppelten Zustand (vgl. gestrichelte Pfeile in Figur 6) in den ersten Steuerungskurvenabschnitt 4'a der Kurve 4' eintreten.

In Richtung zur Übereinanderstellungsposition hin verjüngt sich dieser Abschnitt 4'a zum Abschnitt 4'b und letzterer mündet schließlich in den Abschnitt 4'c. In Richtung radial zur Topfaußenseite hin gesehen hat der Abschnitt 4'c eine geringere Ausdehnung, als der Abschnitt 4'a. Der Abschnitt 4'c ist hier etwa halb so ausgedehnt, wie der Abschnitt 4'a. Diese veränderte Ausdehnung bzw. Breite über die drei Steuerkurvenabschnitte wird dadurch bewirkt, dass beidseits der sich verjüngenden Steuerkurve 4' zwei Wandabschnitte 14'a und 14'b einer U-förmigen Wand 14' ausgebildet sind, die in dieser zweiten Variante eine ähnliche Funktion übernehmen, wie der Keil 14 beim ersten Ausführungsbeispiel. Allerdings mit dem Unterschied, dass die beiden Wandabschnitte 14'a und 14'b in Richtung zum Steuerkurvenabschnitt 4'c hin zusammenlaufen. Die zwischen diesen beiden Wandabschnitten 14'a und 14'b als Führungsvertiefung verlaufende Steuerkurve 4' verjüngt sich also zur Basis der U-förmigen Wand 14' (also im Abschnitt 4'c) maximal.

Beim Übereinanderdrehen der beiden Griffe 3, 5 in ihre miteinander fluchtende Position (Übereinanderstellungsposition) werden somit die beiden Kopplungselemente 1, 2 bzw. deren Lager 1b, 2b (nicht gezeigt, jedoch ganz analog zum ersten Ausführungsbeispiel) entgegen der Kraft der Druckfeder 8 zusammengedrückt, wodurch die beiden Elemente 1, 2 sich in der Lage 4'c im mechanisch aneinandergekoppelten Zustand befinden. Da die innenliegende Seite des ersten Abschnitts 4'a radial gesehen näher an der Topfmittenachse liegt als die innenliegende Seite des Abschnitts 4'c, erfolgt ganz analog wie beim ersten Ausführungsbeispiel ein Zurückziehen des Bolzens 1a (Details hier nicht gezeigt), so dass in der Position 4'c der Dichtring 7 angelegt wird, der Schnelltopfkoch somit druckdicht verschlossen ist.

## Patentansprüche

1. Schnellkochtopf mit
einem Deckel (6) umfassend einen Deckelgriff (5) und einem Kochgefäß (16) umfassend einen Gefäßgriff (3), wobei das Kochgefäß (16) mit dem Deckel (6) mittels eines Verschlussmechanismus (7, 17) fluiddicht verschließbar ist, indem der Deckelgriff (5) und der Gefäßgriff (3) übereinander gestellt werden,
wobei einer (5) der beiden Griffe (5, 3) eine zwei mechanisch aneinander koppelbare und wieder mechanisch voneinander entkoppelbare Kopplungselemente (1, 2) aufweisende Kopplungsgruppe (1-2) umfasst und
dass der andere (3) der beiden Griffe (5, 3) eine zu besagtem Aneinanderkoppeln und/oder zu besagtem Entkoppeln ausgebildete Kopplungsvorrichtung (4, 4', 14, 14') so umfasst, dass beim Übereinanderstellen des Deckelgriffs (5) und des Gefäßgriffs (3) die beiden Kopplungselemente (1, 2) mittels der Kopplungsvorrichtung (4, 4', 14, 14') entweder mechanisch voneinander entkoppelt werden oder mechanisch aneinander gekoppelt werden, wodurch besagtes fluiddichtes Verschließen des Kochgefäßes (16) mit dem Deckel (6) mittels des Verschlussmechanismus (7, 17) bewirkt wird,
**dadurch gekennzeichnet, dass**
die Kopplungsvorrichtung (4, 14) ein Trennelement (14) und zwei durch letzteres voneinander getrennte Steuerkurvenäste (4a, 4b) so aufweist, dass beim Übereinanderstellen des Deckelgriffs (5) und des Gefäßgriffs (3) die beiden Kopplungselemente (1, 2) vom Trennelement (14) mechanisch voneinander entkoppelt und getrennt voneinander mechanisch in die beiden Steuerkurvenäste (4a, 4b) hinein geführt werden.

2. Schnellkochtopf nach dem vorhergehenden Anspruch,
***dadurch gekennzeichnet, dass***
zum mechanisch voneinander Entkoppeln oder zum mechanisch aneinander Koppeln die beiden Kopplungselemente (1, 2) relativ zueinander gesehen vermittels der Kopplungsvorrichtung (4, 4', 14, 14') entlang einer Geraden bewegbar sind.

3. Schnellkochtopf nach einem der vorhergehenden Ansprüche,
***dadurch gekennzeichnet, dass***
die Kopplungsgruppe (1-2) als erstes Kopplungselement (1) ein Bolzenelement und als zweites Kopplungselement (2) ein Schieberelement umfasst, wobei die beiden Kopplungselemente (1, 2) vermittels der Kopplungsvorrichtung (4, 4', 14, 14') relativ zueinander bewegbar sind.

4. Schnellkochtopf nach einem der vorhergehenden Ansprüche,
***dadurch gekennzeichnet, dass***
der die Kopplungsgruppe (1-2) aufweisende Griff (5) mindestens ein Gehäuseelement, bevorzugt zwei Gehäuseelemente (10, 11), hat, vermittels dessen/derer, bevorzugt zwischen denen (10, 11), die beiden Kopplungselemente (1, 2) gegeneinander mechanisch verspannt gelagert oder lagerbar sind, bevorzugt mittels einer Druckfeder (8) gegeneinander vorgespannt gelagert oder lagerbar sind, bevorzugt mittels zweier Druckfedern (8, 12) gegeneinander vorgespannt gelagert oder lagerbar sind.

5. Schnellkochtopf nach einem der vorhergehenden Ansprüche,
***dadurch gekennzeichnet, dass***
besagtes mechanisches voneinander Entkoppeln oder Aneinanderkoppeln der beiden Kopplungselemente (1, 2) mittels der Kopplungsvorrichtung (4, 4', 14, 14') beim Übereinanderstellen des Deckelgriffs (5) und des Gefäßgriffs (3) ein Anlegen eines Dichtelements (7) des Verschlussmechanismus (7, 17) an den Deckel (6) bewirkt, wodurch wiederum besagtes fluiddichtes Verschließen des Kochgefäßes (16) mit dem Deckel (6) mittels des Verschlussmechanismus (7, 17) bewirkt wird.

6. Schnellkochtopf nach dem vorhergehenden Anspruch,
***dadurch gekennzeichnet, dass***
eines (1) der beiden Kopplungselemente (1, 2) der Kopplungsgruppe (1-2) einen Abstandshalter (1a) umfasst, der beim mechanischen Entkoppeln oder aneinander Koppeln relativ zum Deckel (6) so bewegt wird, insbesondere von der Deckelmittenachse aus gesehen so von letzterer weg bewegt wird, dass besagtes Anlegen des Dichtelements (7) an den Deckel (6) erfolgt.

7. Schnellkochtopf nach einem der vorhergehenden Ansprüche,
***dadurch gekennzeichnet, dass***
eines (1) der beiden Kopplungselemente (1, 2) der Kopplungsgruppe (1-2) ein Widerlager (1b) aufweist, wobei sich im aneinander gekoppelten Zustand der beiden Kopplungselemente (1, 2) das Widerlager (1b) an dem anderen (2) der beiden Kopplungselemente (1, 2) mechanisch abstützt, bevorzugt an einem Gegenlager (2b) dieses anderen Kopplungselements (2) mechanisch abstützt.

8. Schnellkochtopf nach den beiden vorhergehenden Ansprüchen,
***dadurch gekennzeichnet, dass***
dasselbe (1) der beiden Kopplungselemente (1, 2) sowohl den Abstandshalter (1a) als auch das Widerlager (1b) aufweist,
wobei der Abstandshalter (1a) zumindest im aneinander gekoppelten Zustand der beiden Kopplungselemente (1, 2), gegebenenfalls auch im voneinander entkoppelten Zustand der beiden Kopplungselemente (1, 2), auf der dem Widerlager (1b) gegenüberliegenden Seite über das andere (2) der beiden Kopplungselemente (1, 2), bevorzugt über dessen Gegenlager (2b), hinaussteht (18).

9. Schnellkochtopf nach einem der vorhergehenden Ansprüche bei Rückbezug auf Anspruch 6,
***dadurch gekennzeichnet, dass***
der Abstandshalter (1a) ein länglicher Körper ist, insbesondere als länglicher Bolzen, Vorsprung, Stab oder Dorn ausgeformt ist, bevorzugt ein zylinderförmiger, länglicher Bolzen und/oder bevorzugt ein länglicher Bolzen mit einem Längen- zu Durchmesserverhältnis ≥ 3, bevorzugt ≥ 5 ist.

10. Schnellkochtopf nach einem der vorhergehenden Ansprüche,
***dadurch gekennzeichnet, dass***
der Deckelgriff (5) abnehmbar am Deckel (6) befestigt ist.

11. Schnellkochtopf nach einem der vorhergehenden Ansprüche,
***dadurch gekennzeichnet, dass***
der Deckelgriff (5) die Kopplungsgruppe (1-2) umfasst und dass das zweite Kopplungselement (2) derselben (1-2) so ausgebildet ist, dass es von der Deckelmittenachse aus gesehen von letzterer weg bewegbar ist unter mechanischer Mitnahme des ersten Kopplungselements (1) der Kopplungsgruppe (1-2), um das Abnehmen des Deckelgriffs (5) vom Deckel (6) zu ermöglichen.

## Claims

1. Pressure cooker comprising:
a lid (6) comprising a lid handle (5) and a cooking vessel (16) comprising a vessel handle (3), wherein the cooking vessel (16) can be closed in a fluid-tight manner with the lid (6) by means of a closure mechanism (7, 17) by placing the lid handle (5) and the vessel handle (3) one above the other,
wherein one (5) of the two handles (5, 3) comprises a coupling group (1-2) having two coupling elements (1, 2) which can be mechanically coupled to one another and can be mechanically decoupled from one another again, and
that the other (3) of the two handles (5, 3) comprises a coupling device (4, 4', 14, 14') designed for said coupling and/or for said decoupling, such that, when the lid handle (5) and the vessel handle (3) are placed one above the other, the two coupling elements (1, 2) are either mechanically decoupled from one another or are mechanically coupled to one another by means of the coupling device (4, 4', 14, 14'), as a result of which said fluid-tight closure of the cooking vessel (16) with the lid (6) is effected by means of the closure mechanism (7, 17),
**characterized in that**
the coupling device (4, 14) has a separating element (14) and two control cam branches (4a, 4b) separated from one another by the latter in such a way that, when the lid handle (5) and the vessel handle (3) are placed one above the other, the two coupling elements (1, 2) are mechanically decoupled from one another by the separating element (14) and are mechanically guided separately from one another into the two control cam branches (4a, 4b).

2. Pressure cooker according to the preceding claim,
***characterized in that***
for mechanically uncoupling from one another or for mechanically coupling to one other, the two coupling elements (1, 2), seen relative to one another, can be moved along a straight line by means of the coupling device (4, 4', 14, 14').

3. Pressure cooker according to any one of the preceding claims,
***characterized in that***
the coupling group (1-2) comprises a bolt element as a first coupling element (1) and a slide element as a second coupling element (2), the two coupling elements (1, 2) being movable relative to one another by means of the coupling device (4, 4', 14, 14').

4. Pressure cooker according to any one of the preceding claims,
***characterized in that***
the handle (5) comprising the coupling group (1-2) has at least one housing element, preferably two housing elements (10, 11), by means of which, preferably between which (10, 11), the two coupling elements (1, 2) are mounted or can be mounted in a mechanically braced manner with respect to one another, preferably are mounted or can be mounted in a manner pretensioned with respect to one another by means of a compression spring (8), preferably are mounted or can be mounted in a manner pretensioned with respect to one another by means of two compression springs (8, 12).

5. Pressure cooker according to any one of the preceding claims,
***characterized in that***
said mechanical decoupling from one another or coupling to one another of the two coupling elements (1, 2) by means of the coupling device (4, 4', 14, 14'), when the lid handle (5) and the vessel handle (3) are placed over one another, causes a sealing element (7) of the closure mechanism (7, 17) to be applied to the lid (6), whereby in turn said fluid-tight closure of the cooking vessel (16) with the lid (6) is effected by means of the closure mechanism (7, 17).

6. Pressure cooker according to the preceding claim,
***characterized in that***
one (1) of the two coupling elements (1, 2) of the coupling group (1-2) comprises a spacer (1a) which is moved relative to the lid (6) during mechanical decoupling or coupling to one another, in particular is moved away from the lid center axis as seen from the latter, in such a way that said application of the sealing element (7) to the lid (6) takes place.

7. Pressure cooker according to any one of the preceding claims,
***characterized in that***
one (1) of the two coupling elements (1, 2) of the coupling group (1-2) has an abutment (1b), wherein, in the coupled-together state of the two coupling elements (1, 2), the abutment (1b) is mechanically supported on the other (2) of the two coupling elements (1, 2), preferably mechanically supported on an abutment (2b) of said other coupling element (2).

8. Pressure cooker according to the two preceding claims,
***characterized in that***
the same (1) of the two coupling elements (1, 2) has both the spacer (1a) and the abutment (1b),
wherein the spacer (1a), at least in the coupled-together state of the two coupling elements (1, 2), optionally also in the uncoupled state of the two coupling elements (1, 2), projects (18) on the side opposite the abutment (1b) beyond the other (2) of the two coupling elements (1, 2), preferably beyond the abutment (2b) thereof.

9. Pressure cooker according to any one of the preceding claims with reference to claim 6,
***characterized in that***
the spacer (1a) is an elongated body, in particular is formed as an elongated bolt, projection, rod or mandrel, preferably is a cylindrical elongated bolt and/or preferably is an elongated bolt with a length to diameter ratio ≥ 3, preferably ≥ 5.

10. Pressure cooker according to any one of the preceding claims, ***characterized in that***
the lid handle (5) is removably attached to the lid (6).

11. Pressure cooker according to any one of the preceding claims,
***characterized in that***
the lid handle (5) comprises the coupling group (1-2), and **in that** the second coupling element (2) of the same (1-2) is designed to be movable away from the lid center axis, as seen from the latter, while mechanically entraining the first coupling element (1) of the coupling group (1-2), to enable the lid handle (5) to be removed from the lid (6).

## Revendications

1. Autocuiseur avec
un couvercle (6) comprenant une poignée de couvercle (5) et un récipient de cuisson (16) comprenant une poignée de récipient (3), dans lequel le récipient de cuisson (16) peut être fermé de manière étanche aux fluides avec le couvercle (6) au moyen d'un mécanisme de fermeture (7, 17), en plaçant la poignée de couvercle (5) et la poignée de récipient (3) l'une sur l'autre,
dans lequel l'une (5) des deux poignées (5, 3) comprend un groupe d'accouplement (1-2) présentant deux éléments d'accouplement (1, 2) pouvant être accouplés mécaniquement l'un à l'autre et à nouveau découplés mécaniquement l'un de l'autre, et
que l'autre (3) des deux poignées (5, 3) comprend un dispositif d'accouplement (4, 4', 14, 14') réalisé pour ledit accouplement et/ou ledit désaccouplement de telle sorte que, lorsque la poignée de couvercle (5) et la poignée de récipient (3) sont superposées, les deux éléments d'accouplement (1, 2) sont soit découplés mécaniquement l'un de l'autre soit accouplés mécaniquement l'un à l'autre au moyen du dispositif d'accouplement (4, 4', 14, 14'), ce qui provoque ladite fermeture étanche aux fluides du récipient de cuisson (16) avec le couvercle (6) au moyen du mécanisme de fermeture (7, 17),
**caractérisé en ce que**
le dispositif d'accouplement (4, 14) présente un élément de séparation (14) et deux branches de came de commande (4a, 4b) séparées l'une de l'autre par ce dernier de telle sorte que, lors de la superposition de la poignée de couvercle (5) et de la poignée de récipient (3), les deux éléments d'accouplement (1, 2) sont découplés mécaniquement l'un de l'autre par l'élément de séparation (14) et guidés mécaniquement séparément l'un de l'autre dans les deux branches de came de commande (4a, 4b).

2. Autocuiseur selon la revendication précédente,
***caractérisé en ce que***
pour le désaccouplement mécanique l'un de l'autre ou pour l'accouplement mécanique l'un à l'autre, les deux éléments d'accouplement (1, 2) peuvent être déplacés le long d'une ligne droite, vus l'un par rapport à l'autre, au moyen du dispositif d'accouplement (4, 4', 14, 14').

3. Autocuiseur selon l'une quelconque des revendications précédentes,
***caractérisé en ce que***
le groupe d'accouplement (1-2) comprend comme premier élément d'accouplement (1) un élément de boulon et comme deuxième élément d'accouplement (2) un élément coulissant, dans lequel les deux éléments d'accouplement (1, 2) peuvent être déplacés l'un par rapport à l'autre au moyen du dispositif d'accouplement (4, 4', 14, 14').

4. Autocuiseur selon l'une quelconque des revendications précédentes,
***caractérisé en ce que***
la poignée (5) présentant le groupe d'accouplement (1-2) a au moins un élément de boîtier, de préférence deux éléments de boîtier (10, 11), au moyen duquel/desquels, de préférence entre lesquels (10, 11), les deux éléments d'accouplement (1, 2) sont montés ou peuvent être montés en étant mécaniquement tendus l'un contre l'autre, de préférence sont montés ou peuvent être montés en étant précontraints l'un contre l'autre au moyen d'un ressort de pression (8), de préférence sont montés ou peuvent être montés en étant précontraints l'un contre l'autre au moyen de deux ressorts de pression (8, 12).

5. Autocuiseur selon l'une quelconque des revendications précédentes,
***caractérisé en ce que***
ledit désaccouplement ou accouplement mécanique des deux éléments d'accouplement (1, 2) l'un par rapport à l'autre au moyen du dispositif d'accouplement (4, 4', 14, 14') lors de la superposition de la poignée de couvercle (5) et de la poignée de récipient (3) provoque l'application d'un élément d'étanchéité (7) du mécanisme de fermeture (7, 17) sur le couvercle (6), ce qui provoque à son tour ladite fermeture étanche aux fluides du récipient de cuisson (16) avec le couvercle (6) au moyen du mécanisme de fermeture (7, 17).

6. Autocuiseur selon la revendication précédente,
**caractérisé *en ce que***
l'un (1) des deux éléments d'accouplement (1, 2) du groupe d'accouplement (1-2) comprend une entretoise (1a) qui, lors du désaccouplement mécanique ou de l'accouplement mutuel, est déplacée par rapport au couvercle (6), en particulier, vue depuis l'axe central de couvercle, est éloignée de ce dernier de telle sorte que ladite application de l'élément d'étanchéité (7) sur le couvercle (6) a lieu.

7. Autocuiseur selon l'une quelconque des revendications précédentes,
***caractérisé en ce que***
l'un (1) des deux éléments d'accouplement (1, 2) du groupe d'accouplement (1-2) présente une butée (1b), dans lequel la butée (1b) s'appuie mécaniquement sur l'autre (2) des deux éléments d'accouplement (1, 2) lorsque les deux éléments d'accouplement (1, 2) sont accouplés l'un à l'autre, de préférence s'appuient mécaniquement sur une contre-butée (2b) de cet autre élément d'accouplement (2).

8. Autocuiseur selon les deux revendications précédentes,
***caractérisé en ce que***
le même (1) des deux éléments d'accouplement (1, 2) présente à la fois l'entretoise (1a) et la butée (1b),
dans lequel l'entretoise (1a) dépasse (18), sur le côté opposé à la butée (1b), de l'autre (2) des deux éléments d'accouplement (1, 2), de préférence de son contre-appui (2b), au moins à l'état accouplé des deux éléments d'accouplement (1, 2), le cas échéant également à l'état désaccouplé des deux éléments d'accouplement (1, 2) l'un de l'autre.

9. Autocuiseur selon l'une quelconque des revendications précédentes, en référence à la revendication 6,
***caractérisé en ce que***
l'entretoise (1a) est un corps allongé, en particulier est réalisée sous la forme d'un boulon allongé, d'une saillie, d'une tige ou d'un mandrin, de préférence est un boulon allongé de forme cylindrique et/ou de préférence est un boulon allongé avec un rapport longueur/diamètre ≥ 3, de préférence > 5.

10. Autocuiseur selon l'une quelconque des revendications précédentes,
***caractérisé en ce que***
la poignée de couvercle (5) est fixée de manière amovible au couvercle (6).

11. Autocuiseur selon l'une quelconque des revendications précédentes,
***caractérisé en ce que***
la poignée de couvercle (5) comprend le groupe d'accouplement (1-2) et que le deuxième élément d'accouplement (2) de celui-ci (1-2) est réalisé de telle sorte que, vu depuis l'axe central de couvercle, il peut être éloigné de ce dernier en entraînant mécaniquement le premier élément d'accouplement (1) du groupe d'accouplement (1-2) pour permettre le retrait de la poignée de couvercle (5) du couvercle (6).
